# EUROPEAN PATENT SPECIFICATION

(11) **EP 3 627 261 B1**
(45) Date of publication and mention of the grant of the patent: **10.11.2021**
(21) Application number: 18195116.1
(22) Date of filing: 18.09.2018
(51) Int. Cl.: G05B 23/02

(54) **DIAGNOSIS SYSTEM AND METHOD USING PARALLEL ANALYSIS PATHS**
DIAGNOSESYSTEM UND -VERFAHREN MIT PARALLELEN ANALYSEPFADEN
SYSTÈME ET PROCÉDÉ DE DIAGNOSTIQUE EN PARALLÈLE

(43) Date of publication of application: 25.03.2020
(73) Proprietor: Siemens Schweiz AG, 8047 Zürich (CH)
(72) Inventor: Mohajer Ashjaei, Babak, 6003 Luzern (CH)
(74) Representative: Maier, Daniel Oliver

(56) References cited:
- EP-A1- 2 146 262
- EP-A2- 1 752 898
- US-A1- 2007 226 540

## Description

The present invention relates to a method for detecting and diagnosing a fault in system, in particular in a heating, ventilation and air conditioning system. Furthermore, the present invention relates to a computing device.

A significant amount of the total energy consumption in industrialized countries is used for electricity as well as for heating, ventilation, and air-conditioning (HVAC) in buildings. In general, HVAC system performance degrades naturally so that during the plant lifetime different kinds of faults (component faults and sensor faults) can occur. These can result in a great waste of energy. The total energy consumption could be reduced if faults in the HVAC system and its operation could be detected in an early stage. Therefore, fault detection and diagnosis (FDD) systems have become necessary to reduce maintenance costs and to provide energy efficiency with a minimum of engineering cost. In addition, the fear of unscheduled shutdowns and their consequences has motivated companies to perform FDD before the failure occurs. Furthermore, FDD is necessary to reduce maintenance cost and to provide energy efficiency.

FDD methods in the field of HVAC usually require a great number of measurements as fault indicators. Fault classifiers of the methods use the statistically significant deviations of the measurements to detect a fault and use their deviation pattern to diagnose the fault. To determine how many and which measurements should be chosen to fulfill this duty makes it very complex since there are numerous sensors available on HVAC systems. Until today there are several different approaches to solve the FDD problem in HVAC plants, but none of them can so far delivers a reliable, affordable, sustainable, widely usable and scalable solution, which is using the state of the art technologies to detect and classify faults in different types of HVAC systems.

In this context, M. Najafi: Fault Detection and Diagnosis in Building HVAC Systems, 2010, discloses the development of reliable and scalable diagnostic solutions for building HVAC systems. Here, model-based and non-model-based diagnostic algorithms are developed that have the capability of dealing with modeling and measurement constraints more effectively. Furthermore, P. Haves: Fault modelling in component-based HVAC simulation, 1997, discloses models of faulty components or processes that can either be used on-line as part of a fault detection and diagnosis (FDD) system or that can be used in simulations to train or test FDD procedures. Here, some faults may be modelled by choosing suitable values of the parameters of fault free models, whereas other faults require specific extensions to fault free models. Moreover, an example of the modelling of various faults in a cooling coil subsystem is presented and different methods of using simulation in testing and training are discussed.

The European application EP2146262A1 discloses a method and a device for generating a set of lists of potentially faulty components by performing corresponding diagnosis algorithms which are implemented independently of each other, wherein an error value is assigned for each potentially faulty component.

The European application EP1752898A2 discloses a generalized formalism for diagnostics and prognostics in an instrumented system which can provide sensor data and discrete system variable takes into consideration all standard forms of data, both time-varying such as sensor or extracted feature, quantities and other autonomy-enabling components such as planners and schedulers. This approach can be adapted to on-board implementations with no change to the underlying principles.

The American application US20070226540A1 discloses a diagnostic system for localizing faults in diagnostics in a workshop by using an evaluation algorithm to collect fault-specific technical system data relating to the technical device to be analyzed.

It is an object of the present invention to provide a solution how the fault detection and diagnosis in a HVAC system can be reliably determined within a short period and/or with a small amount of data.

According to the invention, this object is solved by a method and by a computing device having the features according to the respective independent claims. Advantageous further developments of the present invention are the subject matter of the dependent claims.

A method according to the invention is used for detecting and diagnosing a fault in a system, in particular in a heating, ventilation and air conditioning system. The method comprises determining a plurality of key performance indicators, wherein the key performance indicators describe an operating state of at least one component of the system. In addition, the method comprises providing a knowledge base, which describes known interdependencies between the key performance indicators in a fault free state. Furthermore, the method comprises comparing the determined key performance indicators with the known interdependencies from the knowledge base for the detecting and diagnosing a fault, in a first analysis path. Moreover, the method comprises providing a model database, which describes models for interdependencies between the key performance indicators, wherein for determining the models predetermined faults are provided, and comparing the determined key performance indicators with the models for the detecting and diagnosing a fault in a second analysis path parallel to the first analysis path.

The method is used for fault detection and diagnosis in a system, in particular, a heating, ventilation and air conditioning system (HVAC system). This HVAC system can be part of a building or a plant. The HVAC system is used to provide thermal comfort and indoor air quality. The HVAC system can comprise a plurality of components, e.g. a water-cooled chiller, a combustion burner, a heat pump, a boiler, a remote terminal unit, an air handling unit, a building management system or the like. The method focuses on the units of components of the HVAC, their physical characteristics and performance. The HVAC system has specific thermodynamic characteristics and key performance indicators (KPIs). These KPIs can describe a current operating state of a component. A KPI can be a value of the system and/or a component with significant relevance. The KPIs can be determined bases on measurements or on signals. It can also be provided that one KPI is defined to include another KPI. Moreover, the KPIs can be defined and extended according to the type of the plant. For example, the KPIs of a water cooled chiller can be: a logarithmic mean temperature difference of evaporator, a logarithmic mean temperature difference of condenser, a mass flow rate of refrigerant, a compressor isentropic efficiency, a drive motor efficiency, a coefficient of performance or the like. In general, the definition for KPI is very flexible, so it can also include a single sensor value such as evaporating pressure. Furthermore, the HVAC system can comprise a plurality of sensors by means of which sensor data or field data can be provided. These sensor data can be used to determine the KPIs. Furthermore, data from a simulator can be used to determine the KPIs. For determining the KPIs, a corresponding data processing can further be performed.

After data processing the fault detection algorithm is executed in two separated analysis paths running in parallel using the behavior of KPIs as an indication of faulty situation. The method consists of two mutually supportive solution paths. The first path starts with a simple and easy to implement knowledge-based solution in the beginning of life cycle of the plant, where the probability of a failure is low. Here is the goal to collect the system specific knowledge during the whole life cycle of the building to ensure continuous enhancements in data quality. In the first path a knowledge-based process monitoring and fault pattern recognition is performed. The method implies that there are interdependencies of KPIs in a fault free state of the system, which results in patterns of these KPIs for a fault free or "healthy" operation. This can be predicted with previous of the system and can be used as reference behavior model, which has to be fulfilled. These known interdependencies or patterns of the KPIs can be stored in the knowledge base. The interdependencies of the determined KPIs can be compared to the known interdependencies stored in the knowledge base. In case the KPIs are not behaving as they are predicted to do, there is an assumption of a potential faulty behavior. Furthermore, it is assumed that in certain faulty situations there is a combined fault pattern of the KPIs, which will behave in a predicted way (e.g. values or slopes) that will give us an indication of this failure. These patterns can be observed during in runtime or during a certain period.

By using the KPIs in the knowledge-based approach or the first analysis path a reduction of high dimensionality and data streams can be achieved. Furthermore, this enables a focusing on the relevant and component specific values. The KPIs can be derived from measurements and internal calculations. For example, the pairwise relationships of the KPIs can be determined due to common measurements and internal physical dependencies. The knowledge of the pairwise relationships can help to predict how the system behaves in a healthy state. There can be relationships with significant relationships and relationships with less relevance. It is one goal to find out the right relationships. Here it is assumed that the OEM knows the machines very well and has information from experts they gather during life cycle of the system (from lab phase to service phase). It is also possible to specify the amount of increase and decrease, add thresholds and/or to perform calculations. It is one goal to specify which information are needed. Furthermore, it is possible to introduce faulty situations to find out general KPI behavior pattern for each fault.

The second analysis path is used for statistical process monitoring and fault pattern recognition. In parallel to the knowledge-based fault pattern recognition or the first analysis path, a second analysis path can deal with statistical process monitoring and analysis of KPIs in healthy and faulty conditions. The analysis path can also be referred to as solution paths. In the second analysis path, models for the KPIs and/or the interdependencies between the KPIs can be determined using statistical methods. A model database is provided that describes the models. The model database can comprise the mathematical and/or statistical models. Here, a mathematical formulation of the system behavior can be determined. The mathematical models can be based on real data. Due to the data history assumptions can be made not only for the moment but also for the future behavior. In this way, the patterns for the KPIs can be determined if there is only few field data for the plant. In addition, the relationships between the KPIs for fault free and faulty conditions can also be determined within a short period. For determining the models of the interdependencies of the KPIs predetermined errors can be simulated. In particular, fault specific situations are intentionally triggered to provide fault specific data. In this way, the calculation of the models, which are determined for example by means of machine learning methods, can be actively accelerated. When calculating the models, different types of errors and/or combinations of errors can be taken into account. For example, faults from the respective sensors and/or components as well as possible combinations of these faults can be taken into account. It can also be provided that for determining the models during operation of the system, the real components and/or sensors are influenced in order to simulate the errors. In total, it is therefore possible to model complex multivariant correlations among observed variables. For this reason, the detection of higher amount of complex faults in the system is possible. The models of the interdependencies of the KPIs as well as the known interdependencies of the KPIs of the knowledge base can be stored in a cloud or a respective server. The cloud based data storage and data access can introduce automatically process to improve the functions, e.g. using machine learning.

According to the invention, two analysis path or streams that are running in parallel are used. These two streams are complementary to each other. Both paths are used for fault detection and diagnosis. The goal is to detect different types of faults and malfunctions with each analysis path or solution stream. Furthermore, the two processes are combined to catch and handle the largest possible amount of faulty situations. Another goal is to find out, which faults can be detected with the first analysis path and the second analysis path. Overall, thus a generic, robust, cloud based and automated FDD method by means of which the detection of unwanted conditions ("faults") in HVAC systems is ensured can be provided.

The method can be to perform a condition-based maintenance. This maintenance can be performed after one or more indicators show that a component of the system is going to fail or that system performance is deteriorating. Here the prediction of future failures based on the healthy condition of the equipment is performed. Moreover, activities are determined adaptively based on condition data. The advantages are a huge reduction of pain and the manageable amount of data needed. The method can be applied between the time based maintenance and classical machine learning and/or big data analysis.

Preferably, for determining the models, a control loop for controlling an operation of the at least one component is simulated and the predetermined faults are provided by a change of the simulated control loop. It can also be provided that during operation of the system, a real controller is influenced to generate the predetermined fault. During operation of the HVAC system, at least some of the components can be controlled by means of a controller. It has been found that the faults can be easily predefined by influencing the operation of the controller. For this purpose, for example, input variables and/or controller variables of the controller or the control loop can be adapted. The effects on the KPIs or the interdependencies of the KPIs as a result of the change in the control loop can be analysed. In addition, the fault situations can be included in the mathematical or statistical models as well as in the real system or the components. In this way, the faults can be easily specified.

According to an embodiment, the known interdependencies between the key performance indicators in the knowledge base and/or the models for the interdependencies between the key performance indicators in the model database describe a fault-free state of the system, a fault of at least one sensor of the system and/or a fault of at least a component of the system. The fault patterns can be excising for sensor related faults (such as faulty calibration) as well as equipment or component related faults (such as a fouling condenser). These faulty scenarios can all be collected, redefined, adapted and extended in dedicated knowledge bases for both "healthy" and "faulty" patterns through different phases of building life cycle (e.g. design and service). Also in the second analysis path it can be distinguished between sensor faults and equipment faults. For sensor faults a possible statistical analysis approach can be done by using for example a Q-statistic analysis based on principal component analysis to detect sensor failures. After excluding the sensor fault, the equipment fault detection can be done using regression analysis of the plant specific KPIs. It is assumed that there is a reference model for each KPI involving independent variables driving the model (driving variables). These driving variables can be freely defined. Both, in the first path and in the second path it can first be verified whether a fault-free state exists. After that it can be verified whether there is a sensor error. Then it can be verified if there is a component error. Thus, during operation of the HVAC system the faults can be detected reliably.

According to a further embodiment, the KPIs can comprise at least two sub-KPIs. In other words, at least to sub-KPIs can be grouped to one KPI. In this way, the behavior of the individual sub-KPIs can be analyzed to evaluate the fault status of the KPI. If a KPI shows a fault, the individual sub-KPIs can be analyzed in detail to diagnose the fault. It can also be provided that the individual sub-KPIs are examined. If it is determined by means of the sub-KPIs that the KPI provides no fault free value, then this information alone can indicate the fault.

According to a further embodiment the models of the interdependencies of the key performance indicators are determined by means of a statistical method based on learning data, wherein the models are updated continuously. For example regression models can be used to determine the models for the KPIs and/or the interdependencies of the KPIs. By developing a simple structure of the regression models it can be guaranteed that the parameters can be conveniently identified applying statistical learning techniques such as regression analysis (e.g. linear regression or support vector regression). The mathematical expressions (e.g. regression models) of these KPIs can be developed defining independent variables for each KPI and using the incoming data from the field or from a digital twin (here referred to as "simulator") under healthy and faulty conditions. That means that the learning data that are used can be provided by a simulator and/or that can be determined based on field data or sensor data. Furthermore, the current online KPI calculation can be compared against its healthy reference model. In parallel a threshold can be calculated considering the faulty reference model. In case of deviation it can be proved if the deviation is higher than the threshold to detect the failure.

The models describing the KPIs and/or the patterns of KPIs can be stored in a cloud and updated continuously. Using the cloud as data storage, these data are stored in a common and continuously growing knowledgebase. In this cloud the models for healthy KPIs and faulty KPIs can be stored. With increasing amount of healthy and faulty data the KPI models can be improved continuously using field data of the plant itself and the plants of the same type that are connected to each other over the cloud. The cloud-based approach of the second analysis path can improve itself automatically and continuously in quality, scalability and reliability during the life cycle of the system using machine learning techniques.

Furthermore, with the help of labeling and storing data of different lengths a characteristic-based clustering for time series data in the cloud can be applied. By applying this statistical treatment new rules can be extract out of the data and the rule base on the first analysis path can be extended. It is also possible that trough the analysis of time series datasets with different time lengths is identified. This could help the future series to be preprocessed in order to produce a limited number of measures that are less sensitive to noise. A possible rule based engine could then be considered also for the statistical path or the second analysis path.

According to a further embodiment the learning data describe a fault-free state of the system and/or a predetermined fault of the system. For example, a model for the fault free state can be determined. For this purpose, the field data of the system and/or the data of a simulator can be used. This data can be processed first. Afterwards, the KPIs can be selected. The model can then be determined for the fault free state using the statistical methods. In the same way, models for different faults can be determined. As already mentioned, the learning data can be calculated by means of a simulator. Alternatively or additionally, the learning data can be field data or sensor data of the plant or the HVAC system.

According to a further embodiment the simulator is corrected during a learning phase, wherein for correcting the simulator, a deviation between key performance indicators, which are determined by means of the simulator, and key performance indicators, which are determined based on field data of the system, is determined. In particular the KPIs can be compared pairwise. To provide a simulator, first a standard simulator can be used, which is adapted accordingly. To adapt the simulator, the difference or deviation between the KPIs calculated by the simulator and the KPIs determined based on the field or sensor data is determined. A machine learning technique, e.g. a support vector machine, can be used to determine and forecast the difference. Based on the difference corrected simulated KPIs can be determined. In this way a reliable simulation can be made possible.

To determine the deviation or variation between the KPIs from the field and the KPIs from the simulation a first function can be defined that describes the pairwise comparison of KPIs using the field data and a second function can be defined that describes the pairwise comparison using the data from the simulation. In addition, an error function can be determined to approximate the second function to the first function. Both functions can approximate a given set of points as well as possible. This procedure can also be extended to a plurality of functions. In this case, the idea is to find a function that approximates the plurality of functions as well as possible. In addition, this method can be used to determine the deviations of at least two components, machines and/or systems. In this way, components, machines and/or systems at different locations and/or with different environmental conditions can be compared. Furthermore, components, machines and/or systems with minor structural differences can be compared. Thus, a common tendency can be recognized among the different components, machines and/or systems.

According to a further embodiment the simulator is additionally used in the operation of the system by comparing the key performance indicators, which are determined by means of the simulator, and the key performance indicators, which are determined based on the field data of the system, to diagnose a fault. The corrected simulator with the KPI specific correction models can be used as a reference to healthy condition and compare the data (KPIs) coming out of it with the one from the real field in runtime. This can be used in the same way to diagnose the fault during operation of the HVAC system.

According to a further embodiment in a third analysis path for detecting and diagnosing the fault, a machine learning method is used, which is trained by means of labeled known fault data. The training data can be generated by labeling historic data or a specific faulty situation. In this way, a supervised learning can be provided. The labelled data can be fed to a machine learning algorithm. Furthermore, the relationship between a data recorded and the labeled output can be examined. In this way, the fault detection and diagnosis can be further improved.

A computing device according to the invention for detecting and diagnosing a system, in particular in fault in a heating, ventilation and air conditioning system, is adapted for performing a method according to the invention and the advantageous embodiments thereof. The computing device can be part of a cloud. In a further embodiment, the computing device is configured to revise data from components, systems and/or HVAC equipment located in locally different places and provide data for the knowledge data base and/or the model data base. For example, data from different components or systems that are located in different places can be received. Therefore, data that describe different environment conditions can be used to update the databases. In addition, data from different types of systems and/or components can be received.

In runtime it can be verified if the actual pattern of the KPIs measured using the incoming data from the field or from a digital twin or simulator is fulfilling the healthy pattern. In case of deviation, it can be proven if there is any faulty pattern being recognized as a source of the behavior. In this case fault detection is being triggered. If there is no pattern recognized the commissioning engineer at the field or other experts can extend the faulty pattern data base for this new faulty situation. In general this is an iterative process which ensures having reliable machine specific fault and healthy knowledge-base over time bundling the knowhow of different phases of the life cycle.

The invention also relates to a computer program product comprising program code stored in a computer readable medium, and which when executed by a processor of a computing device causes the processor to perform a method according to the invention or its embodiments.

For example, the user of a system or a HVAC system can be provided with a computer program product by means of which the faults can be detected and diagnosed. In particular, an application can be provided which can be executed, for example, on a portable computer, smartphone or tablet. It can also be provided that the user can make an operator input or give feedback. Thus, for example, the user can confirm a detected error. This information can then be used to improve the data stored in the cloud. Related to the severity of the issue, the tool provides furthermore appropriate recommendations such as: ignore, adjust the controls to compensate for the fault, schedule service when it is convenient or shut down the machine and repair it now.

For OEMs that sell a high quantity of machines worldwide this is a great benefit to be able to optimize their maintenance costs as well as machine efficiency remotely. The idea described here, is mainly focusing on fault detection and diagnostics (FDD), however the proposed method can also be used for optimization processes in units, buildings and plants. Another area could be performance contracting, where the saving of energy and uptime of equipment is generating direct income.

The preferred embodiments presented with respect to the method according to the invention and the advantages thereof correspondingly apply to the computing device according to the invention as well as to the computer program product according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone without departing from the scope of the invention.

In the following, the invention is explained in more detail based on preferred embodiments as well as with reference to the attached drawings. These show in:
- FIG 1: a schematic drawing of the life cycles of a system and knowledge bases for each phase;
- FIG 2: a schematic diagram of a method for detecting and diagnosing a fault in a HVAC system;
- FIG 3: a schematic diagram of a method for improving the interdependencies between KPIs;
- FIG 4: a schematic representation of a HVAC system according to a first embodiment;
- FIG 5: a diagram that describes the head of a pump in dependence of the flow rate;
- FIG 6: a schematic flow diagram of a method for determining a model describing a fault free system;
- FIG 7: a schematic flow diagram of a method for determining a model describing a fault in the system;
- FIG 8: a schematic flow diagram of a method for detecting and diagnosing a fault in a HVAC system;
- FIG 9: a schematic diagram of a learning phase of a simulator for fault free conditions and fault conditions;
- FIG 10: a schematic diagram of a method for operating a corrected simulator for fault free conditions and fault conditions;
- FIG 11: a graph that shows the interdependencies between two key performance indicators; and
- FIG 12: a schematic diagram of a method for performing a third analysis path.

In the figures, identical or functionally identical elements are provided with the same reference characters.

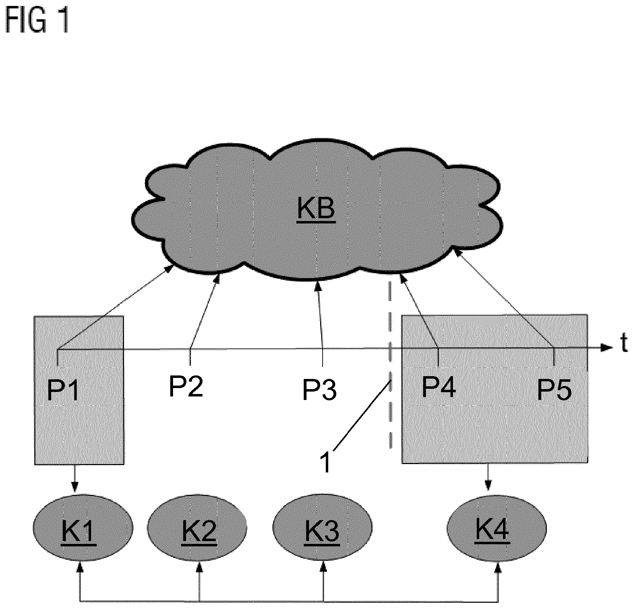

Systems 13 for heating, ventilation, and air conditioning (HVAC systems) are used in buildings to provide thermal comfort and indoor air quality. FIG 1 shows a schematic drawing of a life cycle of a system 10. The individual phases P1 to P5 of the cycle are shown as a function of time t. Phase P1 corresponds to the design, phase P2 corresponds to the building and/or installation, phase P3 corresponds to the commissioning, phase p4 corresponds to the operation and phase P5 corresponds to the service. In addition, line 1 describes the handover or the acceptance. In the different phases P1 to P5 knowledge bases K1 to K4 can be determined. For example, in phase P1 a first knowledge base K1 can be provided by an OEM lab. In addition, in phase P2 a second knowledge base K2 can be provided by the OEM field, in phase P3 a third knowledge base K3 can be provided by a consultant engineer and in phases P4 and P5 a fourth knowledge base K4 can be provided by a service engineer. Looking at this situation from the point of view of an OEM and considering the system life cycle as shown in FIG 1, often it is the case that the knowledge bases K1 to K4 gathered trough the life cycle of the system 10 are not necessarily connected together. Here, a common global knowledge base KB over the phases P1 to P5 is determined, which leads to a much bigger high quality overall knowledge base KB.

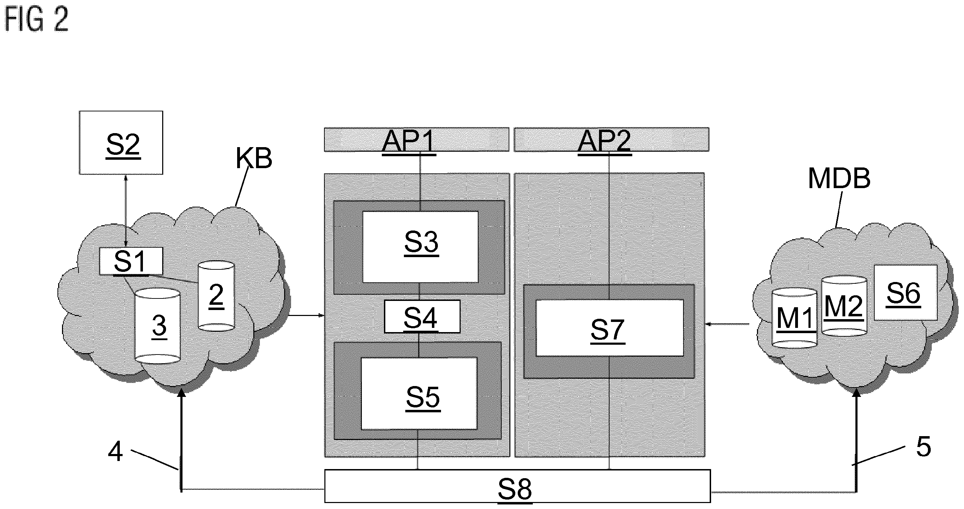

It is a goal to develop a generic, robust, cloud based and automated fault detection and diagnosis method by means of which the detection of unwanted conditions ("faults") in HVAC systems 13 is ensured and by means of which continuous improvement of the quality and reliability guaranteed. FIG 2 shows a schematic diagram of a method for detecting and diagnosing a fault in a HVAC system 10. One of the central ideas behind this method or the algorithm is that the fault detection is done in two separated analysis paths AP1 and AP2 running in parallel using the behavior of key performance indicators (KPIs) as an indication for healthy or faulty situations. The first analysis path AP1 is a knowledge based approach which is dealing with general behavior of groups of KPIs healthy and faulty system behavior. A knowledge base KB is provided in the form of a cloud. In a step S1 a definition and calculation of the KPIs is performed. To determine the KPIs input data from field provided. In addition, in a step S2 reference values from a supplier and/or institutes for the components 14 of the system 10 and/or components of the same type are provided to determine the KPIs. Furthermore, data sheets of the components 14 of the system can be used. The knowledge base KB is divided in two different groups 2 and 3. First group 2 is dealing with KPI predefined relationship patterns in healthy conditions which are being used as a reference for detection of a healthy system. Second group 3 is dealing with predefined KPI behavior patterns in case of faults for different sensors which is being used as reference for detection of faults.

In a step S3 a rule based prediction of the KPIs in the fault free system are performed. Here, it is verified if the system 10 is behaving as expected by comparing the KPIs from the knowledge base KB or the group 2 and the KPIs from the field. Furthermore, prediction tables can be used. Interdependencies between the KPIs in the fault free state are determined. In a step S4 a violation or variation from the fault free state are detected. Moreover, in a step S5 rule based prediction of the KPIs in the faulty system are performed using prediction tables. In this case, the KPIs of group 3 of the knowledgebase KB can be used. Here, the interdependencies for different types of faults can be determined. For example, a distinction can be made between sensor faults and component faults.

In the second analysis path AP2 input data from a simulator are provided. Data processing ca be performed, wherein the data processing can include a selection, transformation and pre-processing for machine learning purposes, e.g. linearization, scatter correction, sampling or the like. Fault detection basically starts after the phase of data processing. When applying statistical analysis and machine learning algorithms which learn from data, it is important to make sure that these data are in a useful scale, format and meaningful features are included. In the phase of data processing this has to be done. The second analysis path AP2 is dealing with automatic data based pattern recognition using reference mathematical models of the KPIs. In parallel and automatically mathematical models of faulty and healthy KPI behaviors are being developed using statistical methods. Here a cloud based model database MDB is used which comprises models M1 of KPIs for a fault free system and models M2 for a faulty system.

Furthermore, in a step S6 a KPI model definition and calculation is performed. One method would be using statistical regression analysis for regression modeling of each KPI and comparing these models against the measured KPIs behaviors in runtime or analyzing them over certain period of time. The models M1, M2 are continuously enhanced since the models M1, M2 are being continuously updated using the data pools of healthy and faulty systems. In a step S7 the mathematical functions of the KPIs between the fault free and faulty situations are compared. Furthermore, in step S8 the solutions of the first analysis path AP1 and the second analysis path AP2 are combined to perform the fault detection and diagnosis. Using the results of the parallel analysis paths AP1 and AP2 the detection of the faults and the diagnosis of the faults can performed in combination. Using the results of the detection and diagnosis, verification and feedback from the field is used to verify the knowledgebase KB (arrow 4) as well as the model data base MDB (arrow 5).

This approach is designed to extend its knowledgebase manually but continuously trough different phases P1 to P5 of life cycle connecting the knowledge-bases K1 to K4 of different periods. The presumption of this path AP1 is that in the beginning of the life cycle there will be not too many component and sensor related fault behaviors. So the knowledge base KB starts with a set of known faulty and healthy reference behaviors and extend themselves over time. Using the possibilities cloud is offering, the rules and patterns gathered by connecting the knowledge-bases K1 to K4 trough the life cycle of the plant and also take into consideration the ones of the plants of similar types connected to the cloud. This is a scalable and easy to implement solution using cloud as an overall connected knowledge base KB.

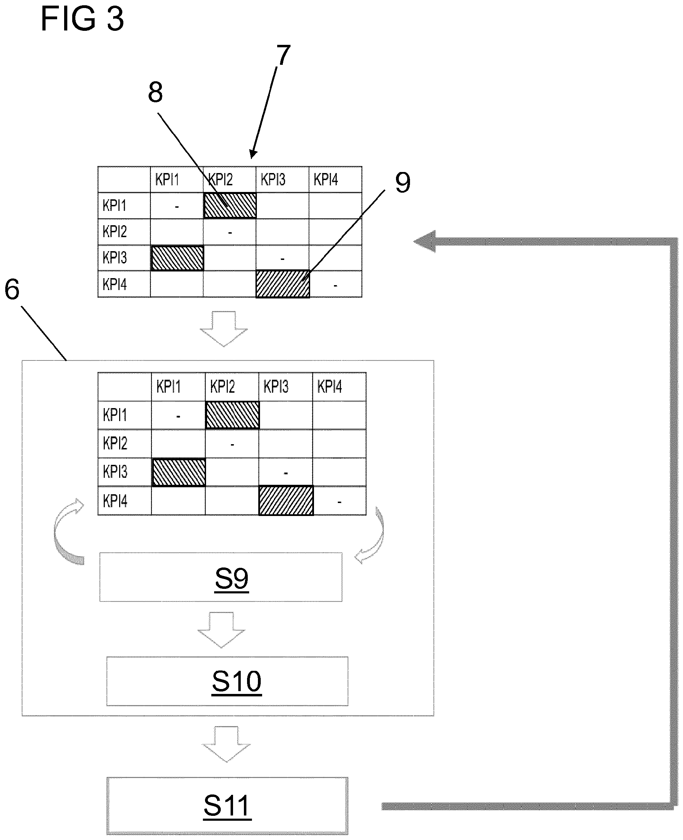

FIG 3 shows a schematic diagram of a method for improving the interdependencies between the KPIs. In the first analysis path AP1 different KPIs are used. These KPIs are derived from measurements and/or internal calculations. Furthermore, these KPIs can be determined based on data sheets and/or manufacturer's instructions. In addition, a pairwise relationship between the KPIs can be determined. In this way, the rules can be defined. In the present example four KPIs KPI1, KPI2, KPI3 and KPI4 are shown pairwise in the rows and columns of a table 7. The KPIs can describe the characteristics and/or an operating state of a component 11. The KPIs of a chiller can be the compressor speed, the refrigerant mass flow, the cooling capacity, the coefficient of performance, the logarithm mean temperature difference of the evaporator or the like. This pairwise relationships can help to predict how the system 10 has to behave in a fault free state. There are some relationships with a significant relevance 8 and other relationships with a low relevance 9.

The comparison the relationships or interdependencies between the KPIs can be used for fault detection. The violation of an ideal behavior could be an indication of a fault behavior. Furthermore, faults in the system 10 and their appearance patterns are known. Such faults can be for example a refrigerant leakage or step losses in an expansion valve.

Here, the comparison of behavior patterns can be used for detection of known faults. In this way, so-called hot spots or faulty situations can be detected. It is the goal to find out the fault patterns and their drifts to the hot spots. It is also taken into account that different hot spots can evolve over time. In the table 7 the interdependencies between the KPIs are defined. This definition of rules is continuously improved. This is done in the live system and/or during the detection (block 6). Therefore, in the live system runtime calculations are performed (step S9) and a detection is performed (step S10). A verification is performed in a workflow wizard (step S11). This wizard can be developed for a lead customer. In this way the defined rules can be extended and continuous enhanced.

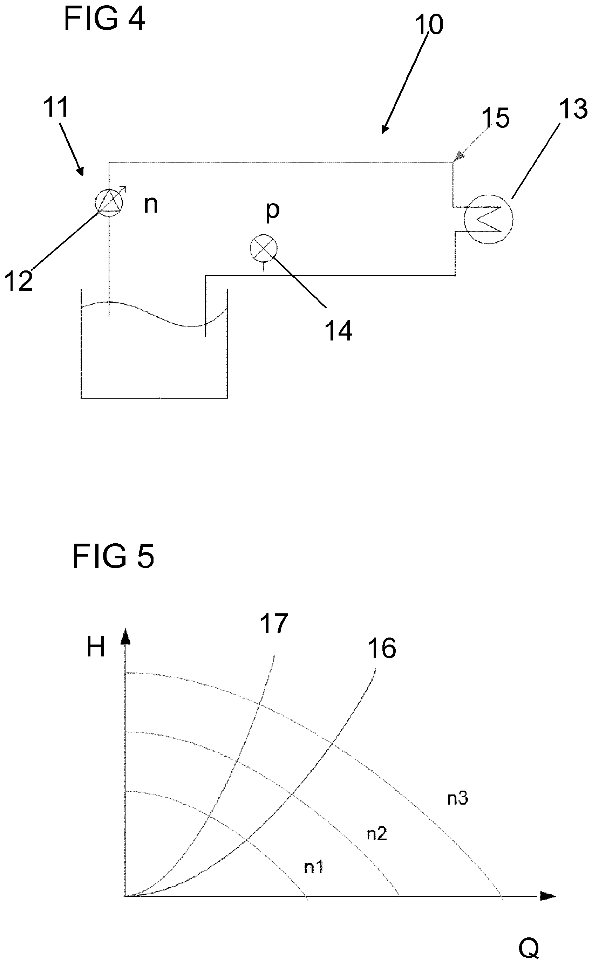

FIG 4 shows a schematic representation of a HVAC system 10 that comprises components 11. As components 11 the system 10 comprises a pump 12, a chiller 13 and a pressure sensor 14. A speed n or the revolution per minute of the pump 12 can be adjusted. By means of the pressure sensor 14 a pressure p can be determined. In the second analysis path AP2 a data driven statistical process for monitoring the fault free system 10 is used. To speed up the process, intentionally relevant fault situations are introduced and the data are stored.

FIG 5 shows a diagram that describes a head H of the pump 15 in dependence of the speed flow rate Q. The static head of a pump 12 is the maximum height (pressure) it can deliver. The capability of the pump 12 at different speeds n1, n2, n3 can be read from this Q-H curve. A system curve 16 relates to the fault free operation of the system 10. The introduction of a fault in form of a sedimentation at a location 15 in the system 10, results in a system curve 17. Here, mathematical models can be determined based on real data that are more precise than the empirical approach of the first analysis path AP1.

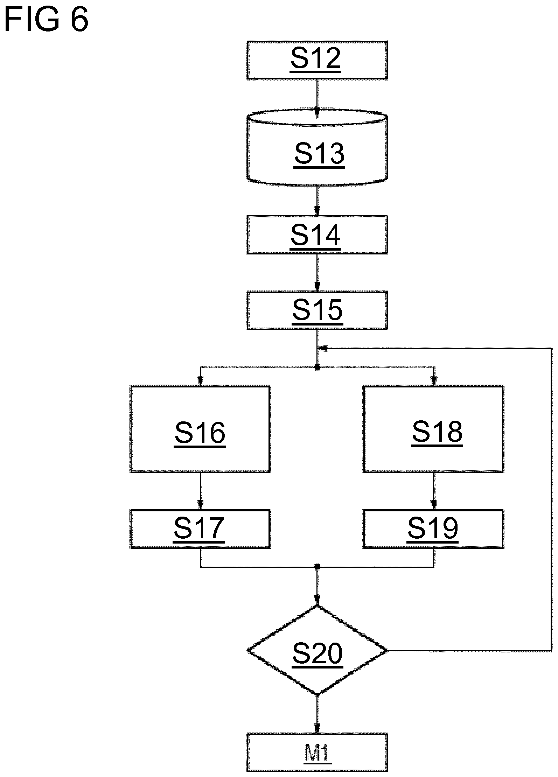

FIG 6 shows a schematic flow diagram of a method for determining a model M1 describing a fault free system. In a step S12 data from a simulator or field data are provided. Furthermore, in a step S13 fault free learning data or test data are determined. In a step S14 a data cleaning and/or data transformation is performed and in a step S15 the KPIs are selected. Moreover, in a step S16 a linear regression modeling is performed, wherein independent variables can be used. In a step S17 a fault free regression model is determined. In parallel, in a step S18 support vector machine is built, wherein an optimal hyperplane, a kernel function and/or a classification function can be used. In a step S19 a fault free structure of the support vector machine is provided. In a step S20 it is verified if the fault free regression model and the fault free structure of the support vector machine are satisfied. If this is true, the fault free model M1 is output. The linear regression modelling and the support vector machine are examples for statistical methods. It is also possible to use other statistical methods.

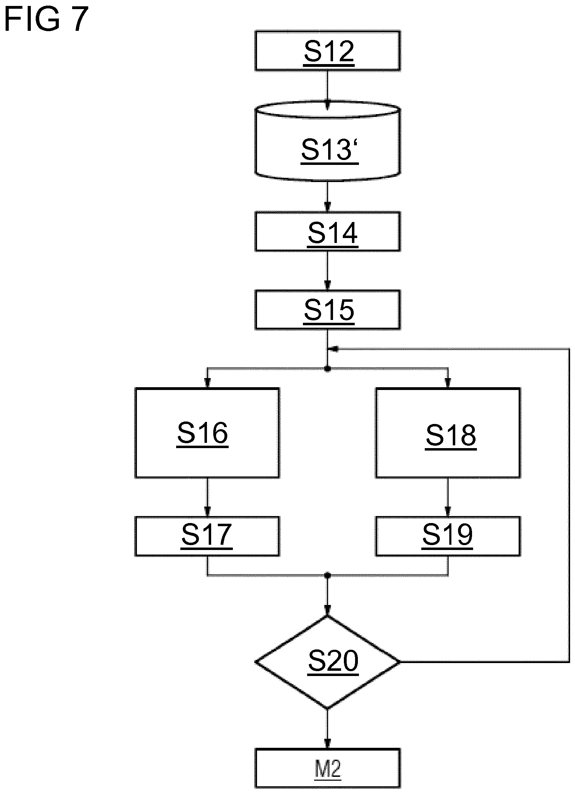

FIG 7 shows a schematic flow diagram of a method for determining a model M2 describing a fault in the system 10. The method differs from the method according to FIG 6 in that in a step S13' fault learning data or test data are determined. In this case, different faults can be considered. The Idea here is to have a super ordinate model, which will be tuned in the first step with the help of a simulator or first data from the field. This model can be tuned over time the more data from healthy and faulty conditions are coming from the field.

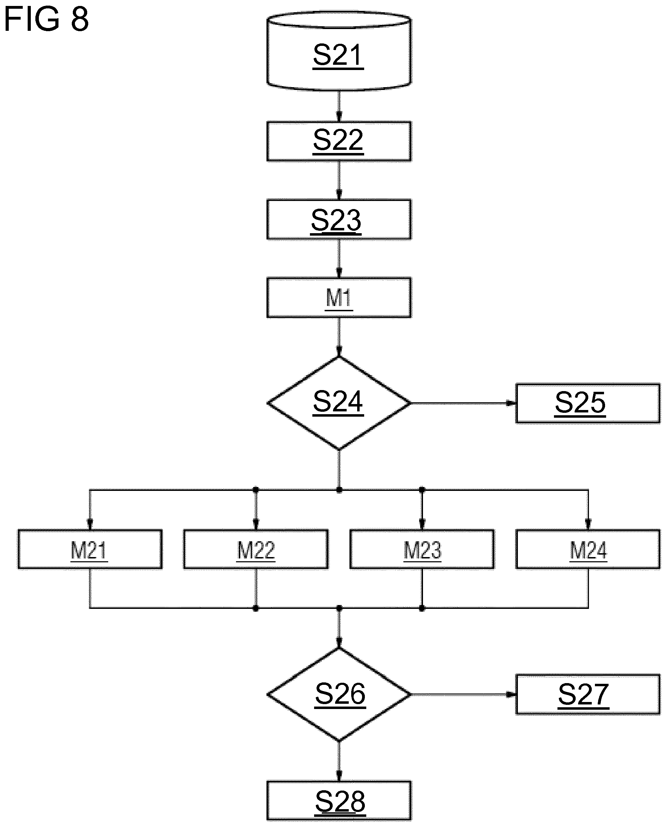

FIG 8 shows a schematic flow diagram of a method for detecting and diagnosing a fault in a HVAC system 10 in the second analysis path AP2. In a step S21 the online data are provided, in a step S22 a data pre-processing is performed and in a step S23 a KPI selection is performed. Using the fault free model M1 it is verified in a step S24 if the condition of the system is normal. If this is true a fault free system is detected in a step S25. In case it is detected in step S24 that the condition is not normal different fault models M21, M22, M23 and M24 are used, wherein these fault models M21 to M24 describe different faults. In a step S26 it is verified if a fault model M21 to M24 or fault pattern was detected. If this is true, the fault can be diagnosed in a step S28, otherwise an unknown fault is detected in a step S27.

Furthermore, it is possible to integrate a simulator in runtime to detect faulty conditions or even the type of fault. Until now a very realistic simulator, which could deliver a very realistic data for healthy and faulty conditions from the field is expected. Since this optimal simulator is not available an approach is delivered how to correct the data coming from the simulator. Furthermore, it will also be introduced an approach how to integrate the "corrected" simulator also in runtime to detect and determine the failures. To use a simulator the forecast difference between the data from real field and data calculated from the simulator has to be determined. In this case healthy data (KPIs) available from the field and for example statistical approaches are used for learning.

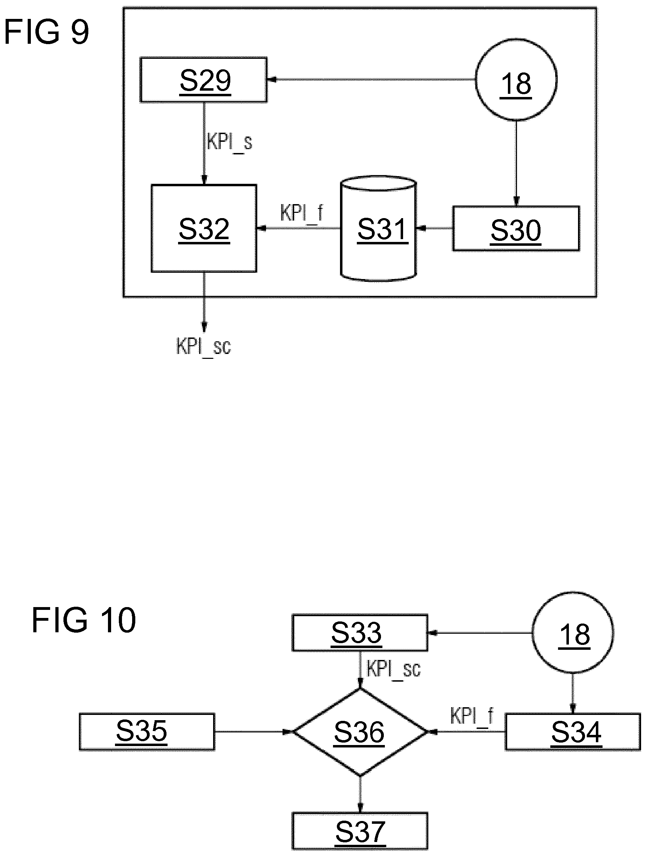

FIG 9 shows a schematic diagram of a learning phase of a simulator. In a step S29 the KPIs are calculated by means of the simulator, wherein the simulated KPI KPI s are output. The simulation is performed depending on a predetermined disturbance 18, e.g. the temperature. Furthermore, in a step S30 these disturbances are introduced in the real system or the real plant. The field data that describe the fault free system are determined in a step S31 and the KPIs of the field KPI_f are output. In a step S32 machine learning techniques such as a support vector machine are used to determine and forecast the difference between the simulated KPIs KPI_s and the KPIs from the field KPI f. Moreover, corrected simulated KPIs KPI_sc are determined. This learning phase can be performed for the fault free condition and for different faults of the system 10.

In next step the corrected simulator with the KPI specific correction models is used as a reference and compare the data (KPIs) coming out of it with the one from the real field in runtime. FIG 10 shows a schematic diagram of a method for operating a corrected simulator. This method can be used for the fault free condition and for different faults of the system 10. The corrected simulation with the corrected simulated KPIs KPI_sc is performed depending on the disturbances 18 in a step S33. Furthermore, in a step S34 the real conditions of the system 10 or component 11 of the system 10 depending on the disturbances 18 are determined. The corrected regression models are provided in a step S35. In addition, in a step S36 a verification is performed. If fault free conditions is considered, it is checked whether normal conditions are present and if a fault is considered, it is checked whether a fault condition is present. Finally, in a step S37 the condition is output.

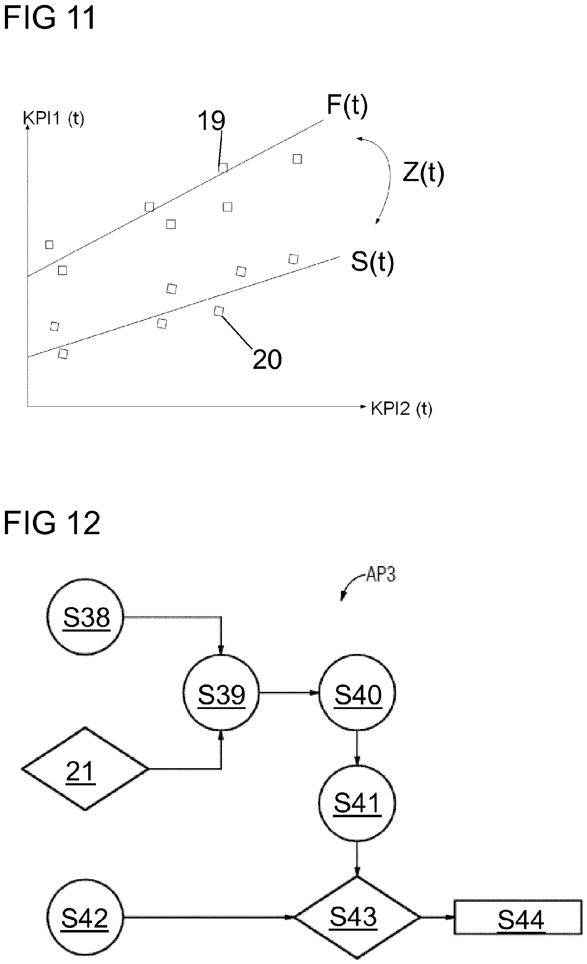

FIG 11 shows a diagram that describes the interdependencies between a first key performance indicator KPI1 and a second key performance indicator KPI2. Both key performance indicators are dependent on the time. From the field data a plurality of values 19 can be determined. Based on these values 19 a time dependent function F(t) can be determined. From the data of the simulation a plurality of values 20 can be determined. In addition, based on these values 20 a time dependent function S(t) can be determined. Moreover, a time dependent error function Z(t) can be determined by means of which the function S(t) can be approximated to the function F(t). The error function Z(t) can describe the deviation between the function F(t) that is based on the field data and the function S(t) that is based on the simulation. This approach can also be extended to a plurality of function and/or a plurality of KPIs. In addition this approach can be used to determine the difference between KPIs of different systems 10 and/or components 11. For example the variations of systems 10 and/or components 11 that are exposed to different environmental conditions can be determined.

The method can be extended to a third analysis path AP3, wherein a schematic diagram of a method to perform the third analysis path AP3 is shown in FIG 12. This third analysis path AP3 can be parallel and independent to the first analysis path AP1 and the second analysis path AP2. The third analysis path AP3 using KPIs but applying generic machine learning approaches on labeled data. This can be referred to as supervised learning. In supervised learning, historical data are collected from a real-world system in a specific situation (step S38). A label 21 is provided. In this case it is a faulty situation. The data is labeled according to its expected result. In a step S39 training data are provided, wherein the training data correspond to the labeled historical data.

Further, in a step S40 the training data is processed by machine learning techniques to examine the relationship between a data recorded and the labeled output. This creates a data-driven model (step S41). Furthermore, in a step S42 the current data from the field are provided. Dependent on the current data from the field and the data driven model a pattern recognition is performed in a step S43. In a step S44 the detection of the fault free condition or the fault is performed. The idea is that for any new data, the data-driven model tries to give the best result based upon the data learned and recognize the expected faulty situation. Since OEMs in particular have the opportunity to gather huge amount of data in their labs for specific faulty behaviors, this extra path can be also considered into the method.

### List of reference signs

- 1: line
- 2-3: group
- 4-5: arrow
- 6: block
- 7: table
- 8-9: relationship
- 10: system
- 11: component
- 12: pump
- 13: chiller
- 14: pressure sensor
- 15: location
- 16-17: system curve
- 18: disturbance
- 19-20: values
- 21: label
- AP1: first analysis path
- AP2: second analysis path
- AP3: third analysis path
- F(t): function
- H: head
- d: day
- K1-K4: knowledge base
- KB: knowledge base
- KPI1-KPI4: key performance indicators
- KPI_f: KPI of field
- KPI_s: simulated KPIs
- KPI_sc: corrected simulated KPIs
- M1-M2: model
- MDB: model data base
- n: speed
- n1-n3: speed
- p: pressure
- P1-P5: phase
- Q: flow rate
- S1-S44: step
- S13': step
- S(t): function
- t: time
- Z(t): error function

## Claims

1. Method for detecting and diagnosing a fault in a heating, ventilation and air conditioning system (10), comprising the steps:
- determining a plurality of key performance indicators, wherein the key performance indicators describe an operating state of at least one component (11) of the system (10),
- providing a knowledge base (KB), which describes known interdependencies between the key performance indicators in a fault free state,
- comparing the determined key performance indicators with the known interdependencies from the knowledge base (KB) for the detecting and diagnosing a fault, in a first analysis path (AP1), wherein the first analysis path (AP1) is a knowledge based approach which is dealing with general behavior of groups of key performance indicators healthy and faulty system behavior,
- providing a model database (MDB), which describes models (M1, M2) for interdependencies between the key performance indicators, wherein for determining the models (M1, M2) predetermined faults are provided, wherein for determining the models (M1, M2), a control loop for controlling an operation of the at least one component (11) is simulated and the predetermined faults are provided by a change of the simulated control loop, wherein the models (M1, M2) of the interdependencies of the key performance indicators are determined by means of a statistical method based on learning data, wherein the models (M1, M2) are updated continuously, and
- comparing the determined key performance indicators with the models (M1, M2) for the detecting and diagnosing a fault in a second analysis path (AP2) parallel to the first analysis path (AP1), to perform a condition-based maintenance of the heating, ventilation and air conditioning system (10), wherein the second analysis path (AP2) is dealing with automatic data based pattern recognition using reference mathematical models of the key performance indicators,
- wherein the two analysis paths (AP1, AP2) are running in parallel and are complementary to each other to detect different types of faults and malfunctions with each analysis path (AP1, AP2).

2. Method according to claim 1, **characterized in that** the learning data describe a fault-free state of the system (10) and/or a predetermined fault of the system (10).

3. Method according to claim 1 or 2, **characterized in that** the learning data are calculated by means of a simulator.

4. Method according to claim 3, **characterized in that** the simulator is corrected during a learning phase, wherein for correcting the simulator, a deviation between key performance indicators (KPI_s), which are determined by means of the simulator, and key performance indicators (KPI_f), which are determined based on field data of the system (10), is determined.

5. Method according to claim 3 or 4, **characterized in that** the simulator is additionally used in the operation of the system (10) by comparing the key performance indicators (KPI_s), which are determined by means of the simulator, and the key performance indicators (KPI_f), which are determined based on the field data of the system (10), to diagnose a fault.

6. Method according to any one of the preceding claims, **characterized in that** in a third analysis path (AP3) for detecting and diagnosing the fault, a machine learning method is used, which is trained by means of labeled known fault data.

7. Computing device for detecting and diagnosing a fault in a system, in particular in a heating, ventilation and air conditioning system (10), wherein the computing device is adapted for performing a method according to one of the preceding claims.

8. Computing device according to claim 7, **characterized in that** the computing device is configured to receive data from components (11) located in locally different places and provide data for a model database (MDB) and/or a knowledge database (KB).

## Patentansprüche

1. Verfahren zum Erkennen und Diagnostizieren eines Fehlers in einer Heizungs-, Lüftungs- und Klimaanlage (10), das folgende Schritte umfasst:
- Ermitteln mehrerer wichtiger Leistungskennzahlen, wobei die wichtigen Leistungskennzahlen einen Betriebszustand mindestens einer Komponente (11) der Anlage (10) beschreiben,
- Bereitstellen einer Wissensdatenbank (KB), die bekannte gegenseitige Abhängigkeiten zwischen den wichtigen Leistungskennzahlen in einem fehlerfreien Zustand beschreibt,
- Vergleichen der ermittelten wichtigen Leistungskennzahlen mit den bekannten gegenseitigen Abhängigkeiten aus der Wissensdatenbank (KB) zum Erkennen und Diagnostizieren eines Fehlers in einem ersten Analysepfad (AP1), wobei es sich bei dem ersten Analysepfad (AP1) um eine wissensbasierte Herangehensweise handelt, bei der es um allgemeines Verhalten von Gruppen wichtiger Leistungskennzahlen für fehlerfreies und fehlerhaftes Verhalten der Anlage geht,
- Bereitstellen einer Modelldatenbank (MDB), die Modelle (M1, M2) für gegenseitige Abhängigkeiten zwischen den wichtigen Leistungskennzahlen beschreibt, wobei zum Ermitteln der Modelle (M1, M2) vorgegebene Fehler bereitgestellt werden, wobei zum Ermitteln der Modelle (M1, M2) eine Regelschleife zum Regeln eines Betriebs der mindestens einen Komponente (11) simuliert wird und die vorgegebenen Fehler durch eine Änderung der simulierten Regelschleife bereitgestellt werden, wobei die Modelle (M1, M2) für die gegenseitigen Abhängigkeiten der wichtigen Leistungskennzahlen mithilfe eines auf Lerndaten basierenden statistischen Verfahrens ermittelt werden, wobei die Modelle (M1, M2) ständig aktualisiert werden, und
- Vergleichen der ermittelten wichtigen Leistungskennzahlen mit den Modellen (M1, M2) zum Erkennen und Diagnostizieren eines Fehlers in einem zu dem ersten Analysepfad (AP1) parallelen zweiten Analysepfad (AP2) zwecks Durchführens einer zustandsbedingten Wartung der Heizungs-, Lüftungs- und Klimaanlage (10), wobei es bei dem zweiten Analysepfad (AP2) um automatische datenbasierte Mustererkennung unter Verwendung von mathematischen Referenzmodellen für die wichtigen Leistungskennzahlen geht,
- wobei die beiden Analysepfade (AP1, AP2) parallel laufen und sich ergänzen und so verschiedene Arten von Fehlern und Funktionsstörungen in jedem Analysepfad (AP1, AP2) erkannt werden.

2. Verfahren nach Anspruch 1, **dadurch gekennzeichnet, dass** die Lerndaten einen fehlerfreien Zustand der Anlage (10) und/oder einen vorgegebenen Fehler der Anlage (10) beschreiben.

3. Verfahren nach Anspruch 1 oder 2, **dadurch gekennzeichnet, dass** die Lerndaten mithilfe eines Simulators berechnet werden.

4. Verfahren nach Anspruch 3, **dadurch gekennzeichnet, dass** der Simulator in einer Lernphase korrigiert wird, wobei zum Korrigieren des Simulators eine Abweichung zwischen wichtigen Leistungskennzahlen (KPI_s), die mithilfe des Simulators ermittelt werden, und wichtigen Leistungskennzahlen (KPI_f) ermittelt wird, die auf der Grundlage von Felddaten der Anlage (10) ermittelt werden.

5. Verfahren nach Anspruch 3 oder 4, **dadurch gekennzeichnet, dass** der Simulator zusätzlich bei Betrieb der Anlage (10) zum Diagnostizieren eines Fehlers benutzt wird, indem er die wichtigen Leistungskennzahlen (KPI_s), die mithilfe des Simulators ermittelt werden, und die wichtigen Leistungskennzahlen (KPI_f), die auf der Grundlage der Felddaten der Anlage (10) ermittelt werden, vergleicht.

6. Verfahren nach einem der vorhergehenden Ansprüche, **dadurch gekennzeichnet, dass** in einem dritten Analysepfad (AP3) zum Erkennen und Diagnostizieren des Fehlers ein Maschinenlernverfahren benutzt wird, das mithilfe von gekennzeichneten bekannten Fehlerdaten trainiert wird.

7. Rechenvorrichtung zum Erkennen und Diagnostizieren eines Fehlers in einer Anlage, insbesondere einer Heizungs-, Lüftungs- und Klimaanlage (10), wobei die Rechenvorrichtung zum Durchführen eines Verfahrens nach einem der vorhergehenden Ansprüche ausgelegt ist.

8. Rechenvorrichtung nach Anspruch 7, **dadurch gekennzeichnet, dass** die Rechenvorrichtung so konfiguriert ist, dass sie Daten von Komponenten (11) an unterschiedlichen Standorten empfängt und Daten für eine Modelldatenbank (MDB) und/oder eine Wissensdatenbank (KB) bereitstellt.

## Revendications

1. Procédé pour détecter et diagnostiquer une panne dans un système de chauffage, de ventilation et de climatisation (10), comprenant les étapes constituées par :
- la détermination d'une pluralité d'indicateurs de performance clés, dans lequel les indicateurs de performance clés décrivent un état de fonctionnement d'au moins un composant (11) du système (10) ;
- la fourniture d'une base de connaissances (KB), laquelle décrit les interdépendances connues entre les indicateurs de performance clés dans un état sans panne ;
- la comparaison des indicateurs de performance clés déterminés avec les interdépendances connues qui sont issues de la base de connaissances (KB) pour la détection et le diagnostic d'une panne, selon un premier chemin d'analyse (AP1), dans lequel le premier chemin d'analyse (AP1) est une approche basée sur connaissances qui effectue une évaluation comparative entre le comportement général de groupes d'indicateurs de performance clés et les comportements sain et sous panne du système ;
- la fourniture d'une base de données de modèles (MDB), laquelle décrit des modèles (M1, M2) pour les interdépendances entre les indicateurs de performance clés, dans lequel, pour déterminer les modèles (M1, M2), des pannes prédéterminées sont fournies, dans lequel, pour déterminer les modèles (M1, M2), une boucle de commande pour commander un fonctionnement de l'au moins un composant (11) est simulée et les pannes prédéterminées sont fournies par une modification de la boucle de commande simulée, dans lequel les modèles (M1, M2) des interdépendances des indicateurs de performance clés sont déterminés au moyen d'un procédé statistique qui est basé sur des données d'apprentissage, dans lequel les modèles (M1, M2) sont mis à jour en continu ; et
- la comparaison des indicateurs de performance clés déterminés avec les modèles (M1, M2) pour détecter et diagnostiquer une panne selon un deuxième chemin d'analyse (AP2) qui est parallèle au premier chemin d'analyse (AP1), afin de réaliser une maintenance basée sur condition(s) du système de chauffage, de ventilation et de climatisation (10), dans lequel le deuxième chemin d'analyse (AP2) effectue une reconnaissance automatique de motif(s) sur la base de données en utilisant des modèles mathématiques de référence des indicateurs de performance clés ;
- dans lequel les deux chemins d'analyse (AP1, AP2) courent en parallèle et sont complémentaires l'un de l'autre pour détecter différents types de pannes et de dysfonctionnements en lien avec chaque chemin d'analyse (AP1, AP2).

2. Procédé selon la revendication 1, **caractérisé en ce que** les données d'apprentissage décrivent un état sans panne du système (10) et/ou une panne prédéterminée du système (10).

3. Procédé selon la revendication 1 ou 2, **caractérisé en ce que** les données d'apprentissage sont calculées au moyen d'un simulateur.

4. Procédé selon la revendication 3, **caractérisé en ce que** le simulateur est corrigé pendant une phase d'apprentissage, dans lequel, pour corriger le simulateur, un écart entre les indicateurs de performance clés (KPI_s), qui sont déterminés au moyen du simulateur, et les indicateurs de performance clés (KPI_f), qui sont déterminés sur la base de données réelles d'exploitation du système (10), est déterminé.

5. Procédé selon la revendication 3 ou 4, **caractérisé en ce que** le simulateur est utilisé de façon additionnelle lors du fonctionnement du système (10) en comparant les indicateurs de performance clés (KPI_s), qui sont déterminés au moyen du simulateur, et les indicateurs de performance clés (KPI_f), qui sont déterminés sur la base de données réelles d'exploitation du système (10), pour diagnostiquer une panne.

6. Procédé selon l'une quelconque des revendications précédentes, **caractérisé en ce que**, selon un troisième chemin d'analyse (AP3) pour détecter et diagnostiquer la panne, un procédé d'apprentissage automatique est utilisé, lequel est soumis à apprentissage au moyen de données de pannes connues étiquetées.

7. Dispositif informatique pour détecter et diagnostiquer une panne dans un système, en particulier dans un système de chauffage, de ventilation et de climatisation (10), dans lequel le dispositif informatique est adapté pour réaliser un procédé selon l'une quelconque des revendications précédentes.

8. Dispositif informatique selon la revendication 7, **caractérisé en ce que** le dispositif informatique est configuré pour recevoir des données en provenance de composants (11) qui sont localisés en des endroits différents en termes de localisations et pour fournir des données pour une base de données de modèles (MDB) et/ou une base de données de connaissances (KB).
